# FASCICULE DE BREVET EUROPEEN

(11) **EP 3 900 976 B1**
(45) Date de publication et mention de la délivrance du brevet: **26.03.2025**
(21) Numéro de dépôt: 21168749.6
(22) Date de dépôt: 16.04.2021
(51) Int. Cl.: B60L 53/80, B60K 1/00, B60S 5/06, G06Q 30/06, H02J 7/00

(54) **BATTERIE À DOUBLE IDENTIFICATION, STATION, SYSTÈME ET PROCÉDÉ D'ÉCHANGE DE BATTERIES ASSOCIÉS**
BATTERIE MIT DOPPELKENNUNG, STATION, SYSTEM UND VERFAHREN ZUM AUSTAUSCH VON BATTERIEN
BATTERY WITH DOUBLE IDENTIFICATION, ASSOCIATED STATION, SYSTEM AND METHOD FOR EXCHANGING BATTERIES

(30) Priorité: 21.04.2020 FR 2003973
(43) Date de publication de la demande: 27.10.2021
(73) Titulaire: ZE Way, 75001 Paris (FR)
(72) Inventeur: ROSTAN, Johannes, 545085 Singapour (SG); BOCH, Thierry, 75001 Paris (FR); SINÉUS, Kévin, 75001 Paris (FR)
(74) Mandataire: Santarelli

(56) Documents cités:
- TW-A- 201 201 106
- US-A1- 2016 267 579
- US-A1- 2019 389 325
- US-A1- 2020 067 149

## Description

La présente invention concerne le domaine des véhicules électriques, et notamment des véhicules électriques bicycles, tricycles ou quadricycles, et les solutions de mobilités similaires.

Une application préférentielle de la présente invention concerne les scooters électriques.

L'invention porte plus particulièrement sur les véhicules électriques qui embarquent au moins une batterie pour fournir l'électricité pour l'alimentation d'un ou plusieurs moteurs électriques de propulsion, et qui sont configurés pour que l'utilisateur puisse échanger lui-même la (ou les) batterie lorsque cette dernière est déchargée. De manière générale, l'échange d'une batterie peut consister, pour un utilisateur, à se rendre à proximité d'un point d'échange et de recharge d'un réseau de stations d'échange de batteries, à retirer la batterie déchargée de son véhicule, à échanger, dans un dispositif adapté pouvant être appelé par exemple « station » ou « station d'échange », la batterie déchargée contre une batterie chargée, et à placer la batterie chargée ainsi récupérée dans son véhicule.

Ce type de réseau de stations d'échange de batteries se développe actuellement, et se révèle particulièrement judicieux en milieu urbain. En effet, les véhicules visés, notamment les scooters, sont particulièrement bien adaptés à s'y déplacer, les distances à parcourir sont relativement faibles, et il est aisé d'y constituer un réseau de stations d'échange de batteries selon un maillage géographique cohérent et pouvant être utilisé par de nombreux utilisateurs.

Pour que l'expérience de l'utilisateur lors de l'échange d'une batterie soit satisfaisante, il est nécessaire que l'extraction et la mise en place de la batterie soient les plus simples possibles. En effet, malgré les avancées récentes dans le domaine des batteries, le poids d'une batterie de propulsion d'un scooter électrique demeure relativement important, par exemple de l'ordre de dix kilogrammes (selon l'autonomie souhaitée pour le véhicule), de sorte que toute mesure permettant d'en faciliter la manipulation est souhaitable.

En outre, l'échange de la batterie doit être le plus rapide possible. Ainsi, les étapes de l'extraction et de la mise en place d'une batterie dans le véhicule doivent être simples et intuitives, et ne doivent présenter aucune complexité technique afin d'être accessible à tout utilisateur, avec la meilleure ergonomie possible. Il en est de même au niveau de la station ou borne d'échange, où le dépôt d'une batterie déchargée et la récupération d'une batterie chargée doivent être des opérations simples pour l'utilisateur.

A cette fin, la demanderesse a développé une batterie de forme générale prismatique droite, en l'occurrence parallélépipédique, comportant sur une face une poignée de portage et manipulation, et sur une face opposée un connecteur électrique.

La batterie est ainsi adaptée à être insérée dans un logement de réception de forme correspondante ménagé dans le véhicule recevant la batterie. Le logement comporte sur son fond un connecteur adapté à coopérer par enfichage avec celui de la batterie, de sorte à assurer une connexion électrique entre la batterie et le système électrique du véhicule. La batterie est également adaptée à être insérée dans un logement d'une station ou borne d'échange et de recharge, de manière similaire à son insertion dans le logement du véhicule. Le logement comporte sur son fond un connecteur électrique adapté à la recharge de la batterie.

Ce type de solutions présente néanmoins certains inconvénients, en particulier du fait de la localisation dans un espace public des stations d'échange, et du fait que les échanges de batteries sont réalisés selon un mode en « libre-service ».

En premier lieu, les stations étant situées dans des espaces publics, ou à tout le moins ouverts au public, les logements de réception et leur connecteur sont susceptibles d'être dégradés, par exemple bouchés, par des personnes malintentionnées.

En outre, le fait que les échanges sont réalisés directement par l'utilisateur nécessite un système intuitif, dans lequel la sélection d'une batterie chargée en replacement d'une batterie déchargée doit se faire simplement, sans risque d'erreur ou de mauvaise manipulation. Enfin, il est nécessaire pour le système de s'assurer que l'utilisateur est bien habilité à échanger sa batterie, par exemple en contrôlant que la batterie à échanger est bien habilitée à l'être, ou encore que l'utilisateur a un abonnement valide au service d'échange.

Le document US2016267579A1 propose, dans le cadre d'une location de batterie, d'identifier d'une part la batterie et d'autre part un utilisateur, afin de les associer. Il s'agit en particulier de savoir quel utilisateur a quelle batterie à tout instant. Si cette solution permet une identification de l'utilisateur, elle ne permet pas une identification fiable de la batterie. Dans le domaine des batteries en général, le document TW201201106 décrit qu'une solution pour identifier de manière fiable une batterie est de cumuler deux moyens d'identification, notamment une identification par une puce RFID ou une carte à puce, et une identification à l'aide d'un motif pouvant être lu par un capteur optique (code à barres ou autre motif). Cela permet de lutter contre la contrefaçon ou le vol de batteries.

L'invention vise ainsi à proposer un dispositif permettant de répondre aux problématiques précitées.

Ainsi l'invention porte sur une batterie de véhicule électrique comportant un boîtier contenant au moins une cellule de batterie adaptée au stockage d'énergie électrique et une carte électronique de gestion de la batterie, la batterie comportant en outre un connecteur électrique de la batterie. Selon l'invention, la batterie comporte une puce de radio-identification distincte de la carte électronique et la carte électronique comporte un identifiant unique de la batterie, l'identifiant unique pouvant être lu par un dispositif électronique adapté lorsque le connecteur électrique de la batterie est connecté audit dispositif électronique.

La présence de deux dispositifs distincts d'identification, à savoir une puce de radio-identification et identifiant unique contenu dans une carte électronique de la batterie offre de nombreux avantages.

Dans le cadre d'un réseau d'échange de batteries, cela permet de garantir dans une certaine mesure l'intégrité des batteries, en vérifiant que la corrélation entre l'identifiant de la puce de radio-identification et l'identifiant unique de la batterie est correcte, et en particulier reste inchangée tout au long de la vie de la batterie et de ses multiples échanges.

En outre, une identification par puce de radio identification permet de réaliser une première identification à distance de la batterie. Cette première identification sans fil est particulièrement avantageuse dans le cadre d'un réseau d'échange de batteries en libre-service. En effet, une batterie de véhicule électrique, notamment de scooter, est relativement lourde afin d'assurer une autonomie satisfaisante. Une batterie peut typiquement peser de l'ordre de dix kilogrammes. L'identification par puce de radio-identification permet à une station d'échange doté d'un lecteur de puce de radio identification de détecter qu'une batterie est à proximité, sans que l'utilisateur n'ait d'action à faire. Ainsi, l'utilisateur peut utiliser ses deux mains pour porter la batterie jusqu'à ce qu'elle soit déposée dans la station d'échange de batteries. A cet égard, l'identification de la puce de radio-identification peut avoir pour objectif d'identifier précisément une batterie parmi toutes les batteries pouvant être échangées dans le réseau de stations d'échange de batteries, ou de s'assurer simplement que la batterie appartient au réseau d'échange, sans que l'identité exacte de la batterie ne soit déterminée ou utilisée.

L'identifiant unique de la batterie, lu lorsque la batterie est connectée pour sa recharge dans une station d'échange de batteries permet une identification forte et certaine d'une batterie en particulier. Le degré de fiabilité de l'indentification de la batterie, de manière individuelle, peut être supérieur à celui d'une identification par un moyen sans fil. La carte électronique contenant l'identifiant unique de la batterie peut typiquement être un système de gestion de batterie, couramment désigné par l'acronyme anglophone BMS pour « Battery Management System ».

La puce de radio-identification peut être avantageusement logée à l'intérieur du boîtier. Une puce de radio-identification intégrée dans le boîtier de la batterie limite fortement les risques de détérioration de la puce, de démontage ou d'échange de celle-ci. Dans un mode de réalisation, deux puces de radio-identification sont situées en deux localisations éloignées de la batterie.

La présence de deux puces fiabilise la détection. En particulier, la radio-identification permettant de détecter la présence d'une batterie autorisée à être échangée à proximité d'une station d'échange, cette détection est réalisée de manière très fiable, quelle que soit l'orientation de la batterie lorsqu'elle approche de la station d'échange. L'invention porte aussi sur une station d'échange de batteries pour véhicule électrique, comportant un lecteur de radio-identification adapté à communiquer avec une puce de radio-identification d'une batterie et comportant en outre au moins un connecteur de station adapté à être connecté au connecteur électrique de la batterie pour la lecture d'un identifiant unique de la batterie.

L'invention porte ainsi également sur une station d'échange, complémentaire de la batterie objet de la présente invention. La station permet la lecture et l'utilisation des deux informations d'identification que porte la batterie.

La station peut comporter un ensemble de logements de station adaptés à recevoir chacune une batterie, chaque logement de station comportant un dispositif d'obturation dudit logement de station commandé par un système automatisé d'ouverture et de fermeture, ledit système automatisé étant configuré pour commander l'ouverture d'un logement de station en réponse à la détection par le lecteur de radio-identification d'une proximité d'une puce de radio-identification d'une batterie et à une confirmation, sur le fondement d'une identification de la puce de radio-identification détectée, que la batterie est autorisée à être échangée.

La double identification de la batterie revêt un intérêt tout particulier avec ce type de station d'échange qui sécurise l'accès aux logements de la station et aux batteries qu'elles contiennent par un moyen physique tel qu'une porte, un volet, etc. En particulier, la première identification réalisée à l'aide de la puce de radio-identification permet l'ouverture d'un moyen d'obturation, par exemple un volet, ce qui a le double effet d'indiquer à l'utilisateur dans quel logement déposer la batterie déchargée et de donner accès à ce logement pour y déposer la batterie déchargée.

La station d'échange de batteries peut comporter un système de communication, filaire ou sans fil, permettant un échange de données avec un système informatique distant.

L'invention porte également sur un système d'échange de batteries comportant une station d'échange de batteries telle que précédemment définie et un système informatique distant, la station d'échange de batteries étant adaptée à communiquer avec le système informatique distant via son système de communication, le système informatique distant contenant des données relatives à plusieurs batteries.

Dans un tel système d'échange de batteries, les données contenues par le système informatique distant peuvent comporter, pour chaque batterie :
- un identifiant de chaque puce de radio-identification que comporte la batterie ; et
- l'identifiant unique que comporte la carte électronique de la batterie.

Le système informatique distant, comportant par exemple un ou plusieurs serveurs, qu'il s'agisse d'un système informatique à architecture centralisée ou distribuée, permet l'accès aux données relatives aux batteries et à leur identification. Il permet notamment de valider la cohérence des deux informations d'identification de la batterie, ce qui sécurise le système.

Dans le système d'échange de batteries, les données contenues par le système informatique distant peuvent comporter en outre, pour chaque batterie, un identifiant d'un utilisateur associé à la batterie.

Les données contenues par le système informatique distant peuvent comporter, en association avec l'identifiant d'un utilisateur, des données relatives à un abonnement de l'utilisateur au système d'échange de batteries.

L'ouverture d'un logement de station contenant une batterie chargée peut être commandée après vérification, par communication avec le système informatique distant, des données relatives à l'abonnement de l'utilisateur.

Le système permet ainsi de vérifier non seulement les données relatives à la batterie, mais aussi à l'utilisateur. En particulier, le système associe, et conserve en mémoire, la corrélation entre l'identité d'une batterie et l'identité de l'utilisateur actuel de cette batterie. Lors de l'échange d'une batterie, l'identifiant de l'utilisateur est associé à une nouvelle batterie, à savoir la batterie chargée empruntée par l'utilisateur. Cela permet également, le cas échéant, de vérifier la validité de l'abonnement de l'utilisateur, ou d'autres informations relatives à l'activité de l'utilisateur dans le cadre du réseau d'échange de batteries.

En outre, la délivrance d'une nouvelle batterie peut ainsi être conditionnée à l'autorisation d'une telle délivrance, après avoir par exemple vérifié la validité de l'abonnement de l'utilisateur, que l'utilisateur n'a pas un usage abusif du système (nombre abusif d'échanges sur une période donnée, etc.).

Le système d'échange de batteries peut bien évidemment comporter plusieurs stations d'échange adaptées à communiquer avec le même système informatique distant, formant ainsi un réseau de stations d'échange de batteries.

Le système d'échange de batteries peut comporter en outre un véhicule électrique adapté à recevoir une batterie provenant d'une station d'échange de batteries dudit système, le véhicule comportant des moyens adaptés à lire l'identifiant unique de la batterie, le véhicule comportant en outre des moyens de communication adaptés à communiquer au système informatique distant ledit identifiant unique de la batterie et un identifiant du véhicule.

La liaison entre le système informatique distant et d'autres appareils que les stations d'échange, par exemple les véhicules tels que les scooters, permet de sécuriser encore plus le système en s'assurant par exemple que le véhicule utilisant une batterie est bien celui de l'utilisateur qui a emprunté la batterie. Cela permet par exemple également de développer des logiques de flottes de véhicule, en identifiant des groupes de véhicules associés à des groupes d'utilisateurs.

L'invention porte enfin sur un procédé d'échange d'une batterie d'un véhicule électrique par un utilisateur, pour l'échange d'une batterie déchargée contre une batterie chargée, comportant les étapes suivantes :
- apport d'une batterie déchargée à proximité d'une station d'échange de batteries ;
- détection par la station d'échange de la proximité d'une puce de radio-identification que comporte la batterie déchargée et détermination d'un identifiant de la puce de radio-identification ;
- confirmation, sur le fondement d'un identifiant de la puce que la batterie est autorisée à être échangée ;
- indication par la station d'un emplacement de réception pour la batterie déchargée ;
- connexion d'un connecteur électrique de la batterie (8) à un connecteur de la station, à l'emplacement de réception indiqué ;
- lecture d'un identifiant unique de la batterie, via le connecteur de la batterie dans une carte électronique de la batterie distincte de la puce de radio-identification ;
- transmission de l'identifiant unique de la batterie à un système informatique distant ;
- vérification de la correspondance entre l'identifiant unique de la batterie et l'identifiant de la puce de radio-identification qu'elle porte ;
- vérification, dans le système informatique distant, que des données relatives à l'utilisateur et associées à la batterie à l'aide d'un identifiant de l'utilisateur, autorisent la délivrance d'une batterie chargée ;
- si la délivrance d'une batterie chargée est autorisée, association dans le système informatique distant de identifiant de l'utilisateur à une batterie chargée que contient la station d'échange et délivrance de la batterie chargée.

Le procédé peut comporter en outre une étape de vérification, dans le système informatique distant, de la correspondance entre l'identifiant de puce de radio identification, l'identifiant unique de la batterie, et l'identifiant de l'utilisateur associé à la batterie.

L'échange d'une batterie est ainsi simple pour l'utilisateur, et sécurisé.

D'autres particularités et avantages de l'invention apparaîtront encore dans la description ci-après.

Aux dessins annexés, donnés à titre d'exemples non limitatifs :
la figure 1 représente, selon une vue tridimensionnelle schématique, un scooter électrique comportant un dispositif de réception d'une batterie selon un mode de réalisation de l'invention ;
la figure 2 représente, selon une vue tridimensionnelle schématique, un exemple de batterie pouvant être mise en œuvre dans l'invention ;
la figure 3 représente, selon une autre vue tridimensionnelle schématique, la batterie de la figure 2 ;
la figure 4 représente, selon une vue en coupe, la batterie des figures 2 et 3 ;
la figure 5 représente, selon une vue tridimensionnelle schématique, une première étape d'une séquence d'échange de batteries ;
la figure 6 représente une deuxième étape d'une séquence d'échange de batteries ;
la figure 7 représente une troisième étape d'une séquence d'échange de batteries ;
la figure 8 représente une quatrième étape d'une séquence d'échange de batteries ;
la figure 9 représente une cinquième étape d'une séquence d'échange de batteries ;
la figure 10 représente une sixième étape d'une séquence d'échange de batteries ;
la figure 11 représente une septième étape d'une séquence d'échange de batteries ;
la figure 12 représente une huitième étape d'une séquence d'échange de batteries ;
la figure 13 représente une neuvième étape d'une séquence d'échange de batteries.

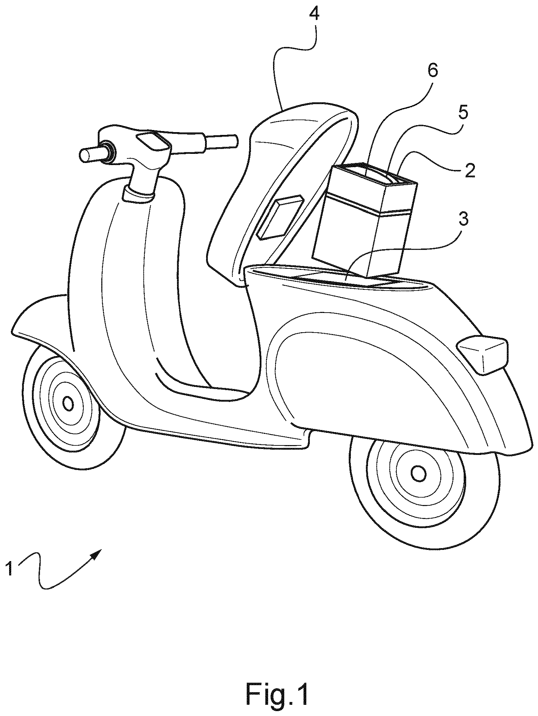

La figure 1 représente, selon une vue tridimensionnelle, un scooter électrique comportant un dispositif de réception d'une batterie selon un mode de réalisation de l'invention.

Le scooter 1 est un scooter à propulsion électrique. A cette fin, une batterie 2 est destinée à fournir l'énergie nécessaire à la propulsion du scooter 1. En particulier, la batterie alimente un système électronique de puissance qui assure l'alimentation électrique d'un moteur électrique, qui permet de propulser le scooter. Alternativement, le véhicule peut être configuré pour recevoir plus d'une batterie, par exemple deux batteries. Cela permet d'augmenter l'autonomie du véhicule, ou de garantir une autonomie suffisante pour un véhicule nécessitant une puissance importante pour se déplacer. Cela peut concerner un véhicule plus lourd, et/ou dont la charge attendue est importante, par exemple un véhicule destiné à des livraisons.

Selon ce principe, le véhicule peut comporter plus de deux batteries, par exemple trois batteries.

Le scooter 1 comporte un logement 3 pour la réception et le branchement de la batterie 2. Le logement 3 est très facile d'accès, se situant, dans l'exemple ici représenté, sous la selle 4 du scooter. La zone sous la selle 4 est, de manière connue, accessible par basculement de la selle 4.

Afin de permettre une mise en place et un retrait facile de la batterie 2 dans le logement 3, le logement 3 peut se présenter essentiellement sous la forme d'un puits permettant une insertion sensiblement verticale de la batterie dans le logement.

Ainsi, le scooter de la figure 1 est particulièrement bien adapté à un échange rapide de la batterie, par exemple pour remplacer une batterie déchargée par une batterie chargée.

Le remplacement de la batterie 2 sur le scooter 1 consiste ainsi simplement à ouvrir la selle 4, extraire par traction la batterie 2 du logement 3, introduire une nouvelle batterie dans le logement 3, et refermer la selle 4.

Une telle séquence simple et rapide est compatible de l'emploi du scooter dans un réseau de stations d'échange de batteries.

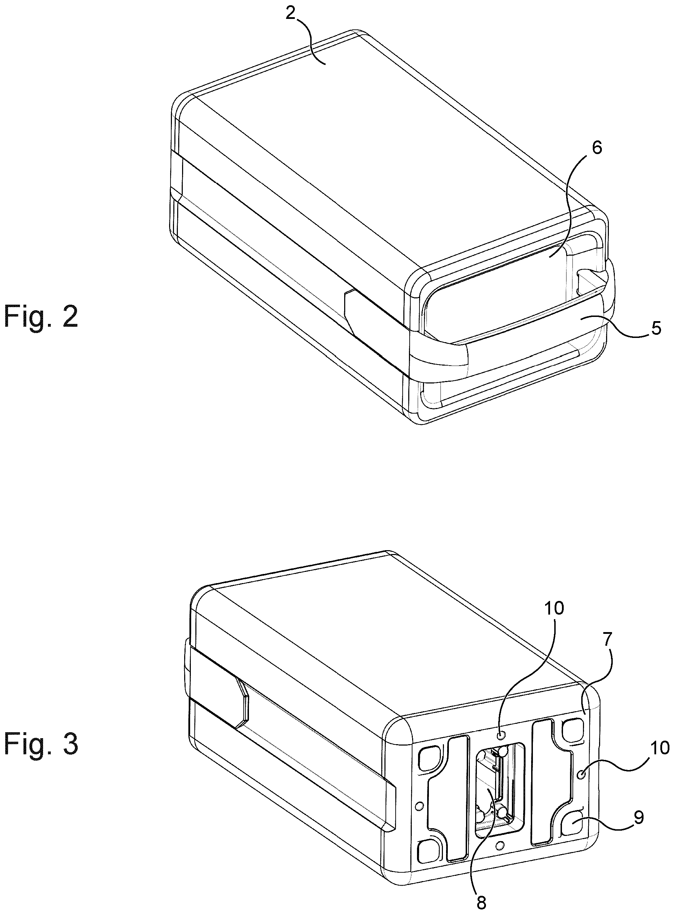

Un exemple de batterie 2 pouvant être utilisée dans le scooter de la figure 1 est représentée à la figure 2.

La batterie 2 comporte dans un boîtier un ensemble de cellules électriques, par exemple de technologies lithium-ion, bien que toute autre technologie de batterie soit envisageable dans le cadre de la présente invention (notamment au plomb, nickel-cadmium, nickel-métal-hydrure, lithium-polymère, lithium-fer-phosphate, aluminium, etc.). La tension nominale de la batterie est adaptée à l'application visée, et peut être à titre d'exemple de 36V, 48V, 60V, 72V, ou toute autre tension appropriée.

La batterie 2 a une forme générale adaptée au logement 3, et comporte une poignée 5 située dans la zone privilégiée de préhension de la batterie, selon la direction d'introduction de la batterie 2 dans le logement 3. Le logement 3 du scooter 1 permettant une introduction sensiblement verticale, la poignée 5 est ménagée sur une face dite supérieure 6 de la batterie.

La batterie 2 présente une forme sensiblement parallélépipédique, s'étendant selon sa direction d'introduction dans le logement 3 du scooter 1, et comportant des arêtes arrondies. Les arêtes arrondies de la batterie facilitent son introduction dans le logement 3 et permettent également de rendre sa manipulation plus agréable et moins contondante pour l'utilisateur.

Bien évidemment, toute autre configuration de batterie est envisageable, notamment toute forme prismatique droite comme détaillé ci-après.

La batterie 2 peut comporter, outre les cellules de batteries, une ou plusieurs cartes électroniques, pouvant comporter notamment un microprocesseur et le cas échéant une mémoire. Ces moyens électroniques peuvent être destinés à la réalisation de diverses fonctions liées à la gestion de la batterie, notamment de sa charge, à l'enregistrement de données relatives à son usage (tension, courants de charge/décharge, informations temporelles, etc).

Cette (ou ces) carte électronique forme un système de gestion de la batterie, couramment désigné par l'acronyme anglophone BMS pour « Battery Management System ». Le système de gestion de la batterie comporte un identifiant unique, qui forme de fait un identifiant unique de la batterie. Cet identifiant unique ne peut pas être modifié, ou, le cas échéant, seulement avec des moyens appropriés et une authentification certaine. En pratique, l'identifiant unique est attribué en usine lors de la fabrication de la batterie et ne peut être modifié que dans le cadre d'opérations de maintenance exceptionnelles.

Comme cela est montré à la figure 3, la face de la batterie opposée à la face sur laquelle est ménagée la poignée 5, pouvant être appelée base 7 de la batterie, comporte un connecteur électrique de la batterie 8. La base 7 constitue également une face sur laquelle la batterie peut être posée sur le sol, et peut ainsi comporter des plots d'appui 9. On notera que bien que le terme connecteur électrique soit employé au singulier, il s'agit d'un ensemble de plusieurs contacts électriques regroupés et organisés sous forme d'une prise, adaptée au branchement d'une prise correspondante.

Le connecteur électrique de la batterie 8 est dit « femelle », en ce qu'il est formé dans la batterie 2 et est adapté à recevoir un connecteur électrique « mâle » s'y insérant. Le connecteur électrique de la batterie 8 est ainsi doté d'un ensemble de contacts femelles adaptés à recevoir des contacts mâles correspondants. Les contacts peuvent être agencés de sorte à permettre une connexion de la batterie selon plusieurs orientations. Par exemple, les contacts peuvent être symétriques, à savoir un contact central et deux contacts répartis de part et d'autre, permettant une connexion selon deux orientations. Bien évidemment, selon des modes de réalisation alternatifs de l'invention, la polarité peut être inversée dans les connecteurs (pôle positif au centre, pôles négatifs de part et d'autre). De même, le caractère mâle ou femelle des connecteurs peut être inversé, la batterie ayant alors un connecteur électrique de la batterie 8 mâle.

La batterie comporte en outre des orifices de centrage 10, permettant le centrage de la batterie dans son logement 3 de réception, et son guidage lors de la connexion du connecteur électrique de la batterie 8.

Le connecteur électrique du véhicule peut en effet être monté flottant de sorte à pouvoir bouger dans le plan formé par son support.

Cela permet un alignement automatique du connecteur électrique du véhicule vis-à-vis du connecteur électrique de la batterie 8 lors du branchement de la batterie 2. Néanmoins cette fonction d'alignement peut être assurée, en alternative ou en complément, par des moyens élastiques ménagés entre une structure fixe du véhicule et un support du connecteur électrique du véhicule.

L'emploi d'un montage flottant du connecteur électrique du véhicule 12 est néanmoins préféré, afin de supprimer les contraintes transversales dans les contacts électriques après connexion de la batterie 2.

Le connecteur de la batterie 8 comporte en outre des contacts électriques additionnels, outre les pôles permettant la charge et la décharge de la batterie.

Ces contacts électriques additionnels permettent la communication avec le système de gestion de la batterie. Les données peuvent être échangées depuis, et/ou vers le système de gestion de la batterie. Notamment, lorsque la batterie 2 est connectée à un connecteur correspondant, par exemple dans une station de recharge, le dispositif auquel la batterie est connectée peut lire l'identifiant unique de la batterie s'il est autorisé à la faire.

Alternativement ou en complément, la communication entre la batterie et le véhicule, et vice-versa, peut être réalisée par des moyens de communication sans contact.

De plus, l'un des contacts électriques additionnels peut être plus court que les autres, de sorte que la détection de sa connexion peut servir à garantir que la batterie est correctement mise en place, avec un branchement correct de son connecteur.

Selon un aspect de l'invention, la batterie 2 est pourvue d'au moins une puce de radio-identification.

Une puce de radio-identification, couramment appelée puce RFID (de l'anglais *radio frequency identification),* est un dispositif permettant de mémoriser et récupérer des données à distance.

Une puce de radio-identification peut également être désignée par les expressions « radio-étiquette », « RFID tag », « RFID transponder » selon la contraction des termes anglophones « transmitter » et « responder », parfois francisée par le terme « transpondeur ».

Les puces de radio-identification se présentent généralement sous la forme d'une étiquette, qui peut être collée sur ou intégrée dans un objet.

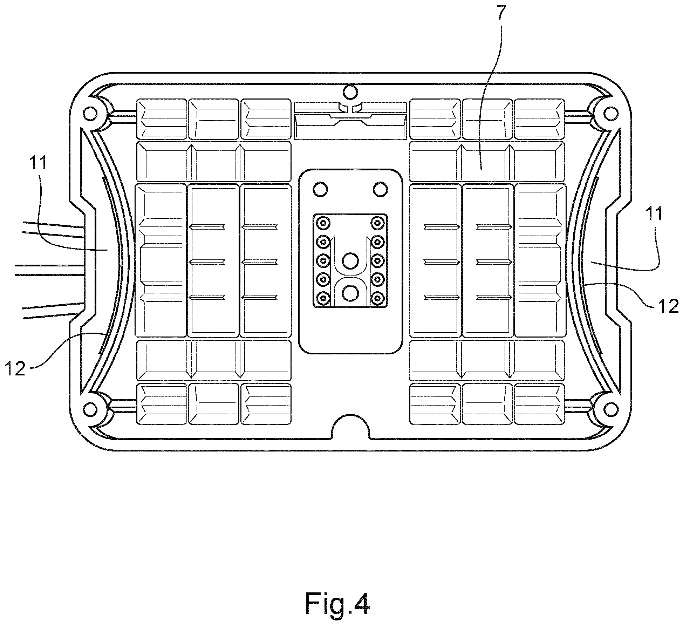

La figure 4 représente un exemple avantageux d'implantation de puces de radio-identification dans la batterie 2. La figure 4 représente en particulier, la base 7 de la batterie, vue depuis l'intérieur de la batterie selon une vue en coupe.

Dans l'exemple de batterie ici représentée, deux logements latéraux 11 sont formés de part et d'autre de la batterie. Une puce de radio-identification 12 est logée dans chacun des logements latéraux 11. La puce de radio-identification 11 peut y être simplement enfermée, ou elle peut y être collée pour un meilleur maintien.

Une fois la batterie assemblée, la puce de radio-identification 11 (ou en l'occurrence, les deux puces de radio identification 11) est encapsulée de manière indémontable dans la batterie, au moins pour l'utilisateur de la batterie.

Dans l'exemple représenté, le positionnement des puces de radio identification, installées verticalement dans la batterie à proximité de deux faces latérales opposées, permet qu'au moins une puce de radio identification soit correctement orientée vis-à-vis d'une station de recharge équipée d'un lecteur adapté en façade, lorsque la batterie 2 est approchée de la station.

Bien évidemment, de nombreuses autres variantes d'installations de la ou des puces de radio-identification sont envisageables. La (ou les) puce de radio-identification peuvent par exemple être simplement collées sur la batterie, par exemple sur sa paroi extérieure ou dans une cavité accessible depuis l'extérieur de la batterie. Une tentative d'arrachage de la puce de radio-indentification 12 aurait pour conséquence de détruire la puce de radio-identification et la rendrait inutilisable.

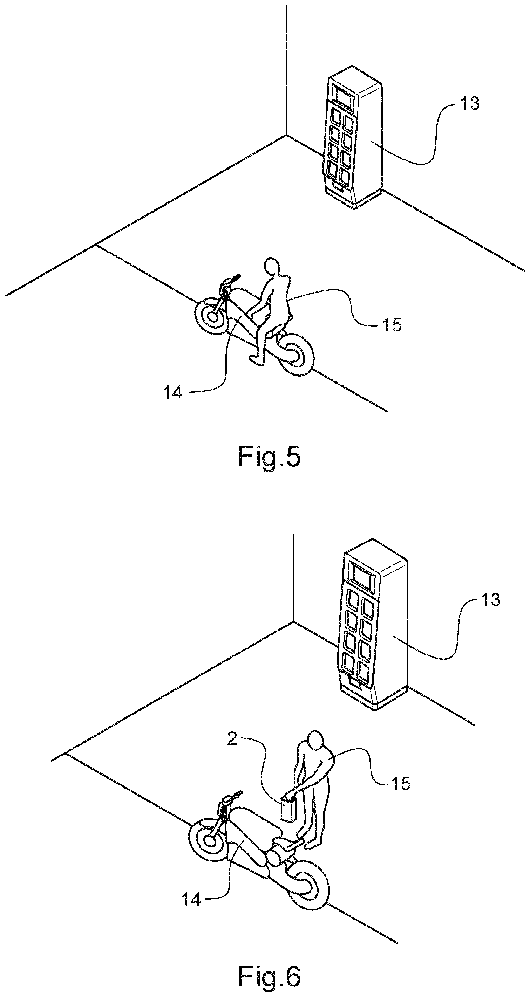

Les figures 5 à 13 présentent les différentes étapes d'une séquence d'échange de batteries d'un véhicule électrique dans une station 13 d'échange et de recharge d'un réseau de station 13 d'échange de batteries. Le véhicule représenté à titre d'exemple est un véhicule deux-roues électrique de type motocyclette. La séquence d'échange est identique pour l'échange d'une batterie du scooter 1.

La figure 5 représente l'arrivée d'un véhicule électrique, par exemple d'une motocyclette 14, à proximité d'une station 13 d'échange et de recharge de batteries. L'utilisateur 15 de la motocyclette 14 la gare à proximité de la station 13.

A la figure 6, l'utilisateur 15 est descendu de la motocyclette 14. Il a extrait la batterie 2 (ou le cas échéant les batteries), qui est déchargée, ou insuffisamment chargée, du véhicule. Pour cela, les moyens de maintien de la batterie 2 dans ou sur le véhicule 2 ont été libérés (par exemple, la selle a été soulevée ou basculée), et la batterie désolidarisée du véhicule.

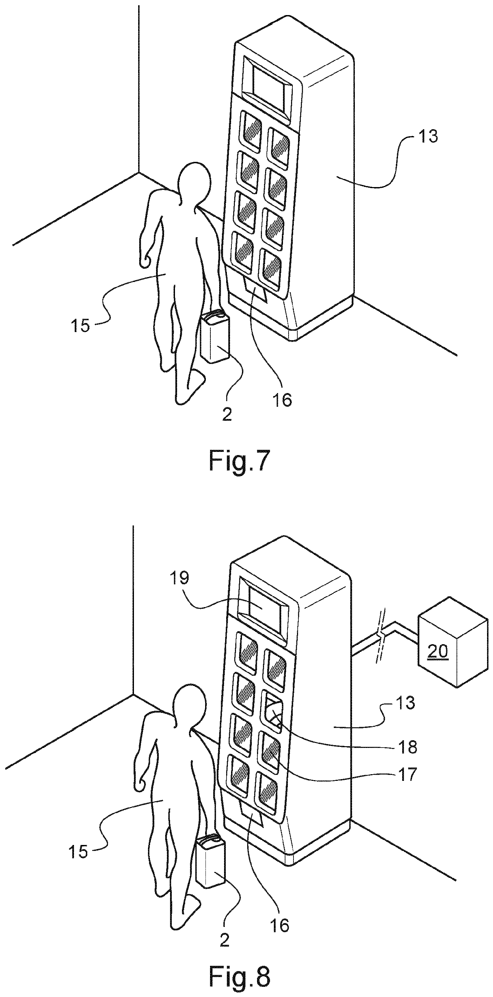

Comme illustré à la figure 7, l'utilisateur 15 s'approche ensuite de la station 13. La station 13 comporte un lecteur de radio-identification 16, permettant de détecter et de lire à distance la (ou les) puce de radio-identification 12 de la batterie 2.

La lecture de la puce de radio-identification 12 permet de déterminer si la batterie est autorisée à être échangée via la station 13. Il peut s'agir de s'assurer que la batterie est l'une des batteries du réseau d'échange. Il peut s'agir d'identifier précisément une batterie parmi les batteries du réseau d'échange. Il peut s'agir de vérifier l'origine de la batterie, c'est-à-dire de quelle station elle a été délivrée, et quand.

Cette autorisation peut être, dans certains cas, vérifiée au niveau de la station 13 elle-même mais est plus couramment vérifiée par interrogation d'un système informatique distant 20. Le système informatique distant 20 contient les informations nécessaires pour autoriser ou non l'échange de la batterie 2 sur le fondement de son identification permise par la puce de radio-identification. Le système informatique distant 20 transmet une réponse à la station 13, quant à l'autorisation (ou non) d'échange de la batterie 2.

La communication entre la station 13 et le système informatique distant 20 peut être réalisée à l'aide de divers réseaux de communication, filaire, par fibre, et/ou par les réseaux de communication sans fil.

Les protocoles de communications à moyenne ou longue portée peuvent être employés, notamment parmi, 5G, LoRa, Sigfox, NB-loT, LTE, GPRS, UMTS, GSM (marques déposées). L'emploi de protocoles alternatifs de ce type, connus ou à venir, est envisageable. En alternative ou plus couramment en complément, les protocoles de communication sans fil à courte portée peuvent être employés parmi : NFC, RFID, Bluetooth, notamment Bluetooth Low Energy, Lifi, et Zigbee (marques déposées). L'emploi de protocoles alternatifs de ce type, connus ou à venir, est envisageable. Comme cela est illustré à la figure 8, si la batterie 2 est autorisée à être échangée, la station 13 va indiquer à l'utilisateur 15 où déposer la batterie 2. Dans l'exemple ici représenté, un volet 17, qui obture un logement de station 18 s'ouvre, et libère ainsi l'accès audit logement de station 18.

La première identification à distance réalisée grâce à la puce de radio identification est particulièrement avantageuse dans le cadre d'un réseau d'échange de batteries en libre-service. Elle permet à une station d'échange doté d'un lecteur de puce de radio identification de détecter qu'une batterie est à proximité, sans que l'utilisateur n'ait d'action à faire. Ainsi, l'utilisateur peut utiliser ses deux mains pour porter la batterie jusqu'à ce qu'elle soit déposée dans la station d'échange de batteries. Cette première identification permet par exemple de valider que la batterie peut être échangée dans la station d'échange, notamment parce que selon cette première identification la batterie est reconnue comme étant une batterie appartenant à l'ensemble des batteries du système d'échange de batteries.

L'identifiant unique de la batterie, lu lorsque la batterie est connectée pour sa recharge dans la station d'échange de batteries permettra ensuite une identification forte et certaine de la batterie en particulier, et permettra de valider qu'une batterie chargée peut être fournie à l'utilisateur en échange, comme expliqué ci-après.

Le logement de station 18 dans lequel la batterie 2 doit être déposée est ainsi clairement indiqué à l'utilisateur, tandis que l'accès physique à ce logement de station 18 est permis.

Un écran 19 de la station 13 peut apporter des informations complémentaires à l'utilisateur 15.

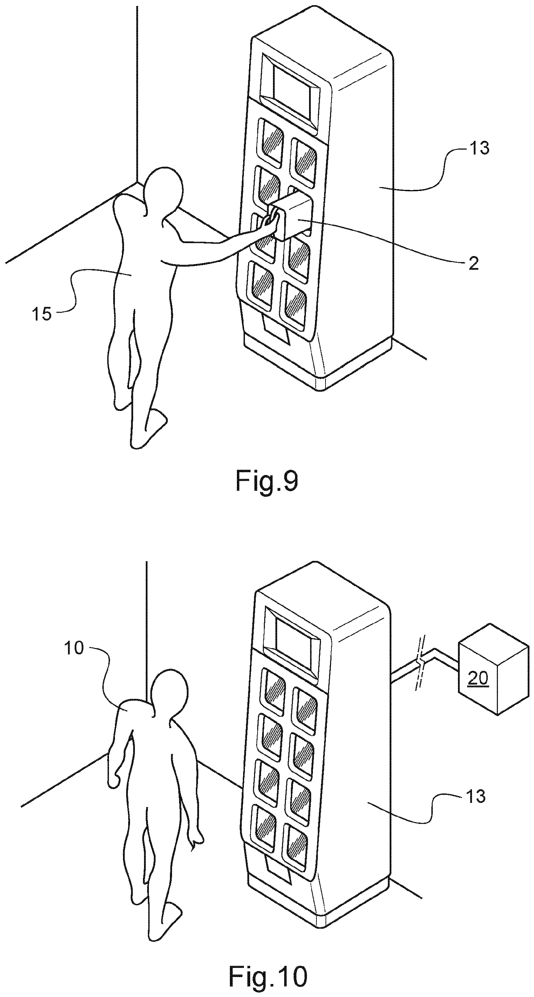

Comme cela est illustré à la figure 9, l'utilisateur 15 dépose alors la batterie 2 dans le logement de station 18 qui est ouvert. La batterie 2 se connecte alors, par exemple sous l'effet de son propre poids, à un connecteur de la station correspondant au connecteur de la batterie 8.

Le volet 17 du logement de station 18 dans lequel la batterie 2 a été déposée se referme alors, comme illustré à la figure 10.

La connexion de la batterie 2 dans la station 13 permettra son rechargement. Dans un premier temps, elle permet de lire des informations enregistrées dans le système de gestion de la batterie, c'est-à-dire dans la carte électronique qu'elle comporte. Notamment, l'identifiant unique de la batterie est lu.

L'identifiant unique de la batterie permet une identification forte et certaine d'une batterie en particulier. L'identifiant unique, dans l'exemple ici représenté, est transmis au système informatique distant 20. Cela permet, le cas échéant, de vérifier que la correspondance entre l'identifiant unique de la batterie et l'identité de la batterie déterminée sur le fondement de la puce de radio-identification qu'elle porte.

Cela permet de détecter une éventuelle anomalie, pouvant correspondre à une manipulation anormale réalisée sur la batterie. Une mesure peut consister à ne pas permettre à la station de fournir cette batterie à un autre utilisateur, et d'envoyer un technicien récupérer cette batterie pour vérification. Cela permet aussi de vérifier des informations liées à l'abonnement de l'utilisateur 15. Pour cela, un identifiant de l'utilisateur est associé à l'identification unique de la batterie lorsqu'elle est fournie à l'utilisateurs. Il est ainsi possible de vérifier, par exemple, si l'abonnement de l'utilisateur est en vigueur, si son paiement est à jour, ou toute autre information concernant l'usage que l'utilisateur fait de son abonnement et plus généralement du service et du réseau d'échange de batteries.

Si la délivrance d'une nouvelle batterie est autorisée au vu des informations transmises au système informatique distant 20, la station est autorisée à délivrer une batterie rechargée à l'utilisateur 15.

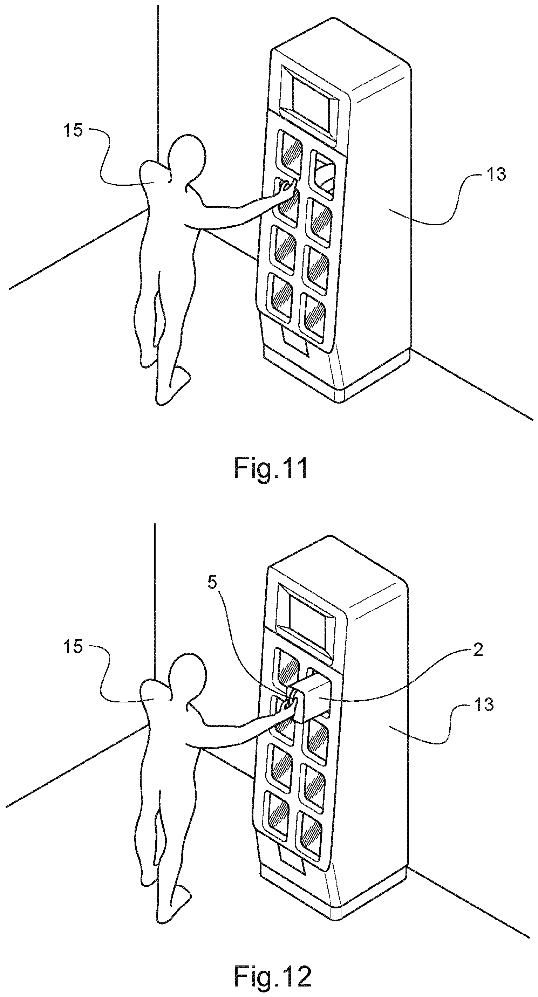

Dans le système informatique distant 20, l'identifiant de l'utilisateur est alors associé à une batterie chargée qui est présente dans la station 13. Par exemple, l'identifiant de l'utilisateur est associé à l'identifiant unique de la batterie. Comme cela est illustré à la figure 11, un volet 17 de la station 13 qui obturait le logement de station 18 qui contient la batterie 2 chargée qui a été associé à l'utilisateur est ouvert.

L'utilisateur 15 sait ainsi quelle batterie récupérer, et il est dans le même temps autorisé à le faire par l'accès physique procuré à la batterie 2, qui est une batterie chargée.

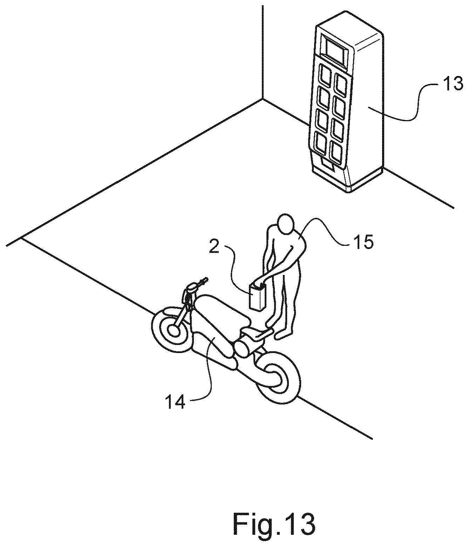

Comme cela est représenté à la figure 12, l'utilisateur 15 saisit alors la batterie 2 qui est accessible par la poignée 5 de la batterie 2. L'utilisateur retire la batterie 2 de la station 13. Après retrait de la batterie 2 qui est chargée, le volet du logement de station qui contenait cette batterie se referme, afin de sécuriser le logement de station. Comme cela est illustré à la figure 13, l'utilisateur 15 se rapproche de son véhicule, à savoir la motocyclette 14, afin d'y installer la batterie 2 chargée qu'il a récupérée.

La double identification de la batterie permet ainsi un service d'échange de batteries fiable et sûr pour l'utilisateur. La première détection de la batterie au moyen d'une puce de radio-identification permet à une station d'échange et de recharge de détecter la batterie à distance de la station, sans qu'aucune action ne soit nécessaire de la part de l'utilisateur. Ainsi, l'utilisateur peut tenir et déposer la batterie déchargée en utilisant ses deux mains, ce qui est avantageux du fait du poids de la batterie.

L'identification d'un second identifiant, à savoir un identifiant unique de la batterie, est infalsifiable.

## Revendications

1. Batterie (2) de véhicule électrique comportant un boîtier contenant au moins une cellule de batterie adaptée au stockage d'énergie électrique, la batterie (2) comportant un connecteur électrique de la batterie (8) et une puce de radio-identification (12) comportant un identifiant ;
**caractérisée en ce que** la batterie comporte une carte électronique de gestion de la batterie, distincte de la puce de radio-identification (12),
et **en ce que** la carte électronique comporte un identifiant unique de la batterie,
l'identifiant unique pouvant être lu par un dispositif électronique adapté lorsque le connecteur électrique de la batterie (8) est connecté audit dispositif électronique.

2. Batterie selon la revendication 1, dans laquelle la puce de radio-identification (12) est logée à l'intérieur du boîtier.

3. Batterie selon la revendication 1 ou la revendication 2, comportant deux puces de radio-identification (12) situées en deux localisations éloignées de la batterie (2).

4. Système d'échange de batteries comportant
- une station (13) d'échange de batteries pour véhicule électrique, comportant :
∘ un lecteur de radio-identification (16) adapté à communiquer avec une puce de radio-identification (12) d'une batterie comportant un identifiant,
∘ un connecteur de station adapté à être connecté au connecteur électrique de la batterie (8) pour la lecture d'un identifiant unique de la batterie distinct de l'identifiant de la puce de radio-identification et sa transmission à un système informatique distant, et
∘ un système de communication, filaire ou sans fil, permettant un échange de données avec le système informatique distant (20),
- le système informatique distant, qui contient des données relatives à plusieurs batteries (2) et qui est configuré pour vérifier la correspondance entre l'identifiant unique de la batterie et l'identifiant de la puce de radio-identification qu'elle porte.

5. Système d'échange de batteries selon la revendication 4, dans lequel la station (13) d'échange de batteries comporte un ensemble de logements de station (18) adaptés à recevoir chacune une batterie, chaque logement de station (18) comportant un dispositif d'obturation dudit logement de station (18) commandé par un système automatisé d'ouverture et de fermeture, ledit système automatisé étant configuré pour commander l'ouverture d'un logement de station (18) en réponse à la détection par le lecteur de radio-identification (16) d'une proximité d'une puce de radio-identification (12) d'une batterie (2) et à une confirmation, sur le fondement d'une identification de la puce de radio-identification (12) détectée, que la batterie (2) est autorisée à être échangée.

6. Système d'échange de batteries selon la revendication 4 ou la revendication 5, dans lequel les données contenues par le système informatique distant (20) comportent, pour chaque batterie (2) :
- un identifiant de chaque puce de radio-identification (12) que comporte la batterie (2) ; et
- l'identifiant unique que comporte la carte électronique de la batterie.

7. Système d'échange de batteries selon la revendication 6 dans lequel les données contenues par le système informatique distant (20) comportent en outre, pour chaque batterie (2), un identifiant d'un utilisateur (15) associé à la batterie.

8. Système d'échange de batteries selon la revendication 7, dans lequel les données contenues par le système informatique distant (20) comportent, en association avec l'identifiant d'un utilisateur, des données relatives à un abonnement de l'utilisateur (15) au système d'échange de batteries.

9. Système d'échange de batteries selon la revendication 8, dans lequel l'ouverture d'un logement de station (18) contenant une batterie (2) chargée est commandée après vérification, par communication avec le système informatique distant (20), des données relatives à l'abonnement de l'utilisateur.

10. Système d'échange de batteries selon l'une des revendications 4 à 9, comportant plusieurs stations (13) d'échange adaptées à communiquer avec le même système informatique distant (20), formant ainsi un réseau de stations d'échange de batteries.

11. Système d'échange de batteries selon l'une des revendications 4 à 10, comportant en outre un véhicule électrique adapté à recevoir une batterie (2) provenant d'une station (13) d'échange de batteries dudit système, le véhicule comportant des moyens adaptés à lire l'identifiant unique de la batterie, le véhicule comportant en outre des moyens de communication adaptés à communiquer au système informatique distant (20) ledit identifiant unique de la batterie (2) et un identifiant du véhicule.

12. Procédé d'échange d'une batterie d'un véhicule électrique par un utilisateur (15), pour l'échange d'une batterie (2) déchargée contre une batterie (2) chargée, comportant les étapes suivantes :
- apport d'une batterie (2) déchargée à proximité d'une station (13) d'échange de batteries ;
- détection par la station (13) d'échange de la proximité d'une puce de radio-identification (12) que comporte la batterie (2) déchargée et détermination d'un identifiant de la puce de radio-identification (12) ;
- confirmation, sur le fondement d'un identifiant de la puce que la batterie est autorisée à être échangée ;
- indication par la station (13) d'un emplacement de réception pour la batterie (2) déchargée ;
- connexion d'un connecteur électrique de la batterie (8) à un connecteur de la station, à l'emplacement de réception indiqué ;
- lecture d'un identifiant unique de la batterie dans une carte électronique de la batterie distincte de la puce de radio-identification, via le connecteur de la batterie ;
- transmission de l'identifiant unique de la batterie à un système informatique distant ;
- vérification de la correspondance entre l'identifiant unique de la batterie et l'identifiant de la puce de radio-identification qu'elle porte ;
- vérification, dans le système informatique distant (20), que des données relatives à l'utilisateur et associées à la batterie à l'aide d'un identifiant de l'utilisateur, autorisent la délivrance d'une batterie (2) chargée ;
- si la délivrance d'une batterie (2) chargée est autorisée, association dans le système informatique distant (20) de identifiant de l'utilisateur à une batterie (2) chargée que contient la station (13) d'échange et délivrance de la batterie (2) chargée.

13. Procédé d'échange selon la revendication 12, comportant en outre une étape de vérification, dans le système informatique distant (20), de la correspondance entre l'identifiant de puce de radio identification, l'identifiant unique de la batterie, et l'identifiant de l'utilisateur associé à la batterie.

## Patentansprüche

1. Batterie (2) für ein Elektrofahrzeug, die ein Gehäuse umfasst, das mindestens eine Batteriezelle enthält, die zur Speicherung elektrischer Energie geeignet ist, wobei die Batterie (2) einen elektrischen Anschluss der Batterie (8) und einen Funk-Identifikationschip (12) umfasst, der eine Kennung umfasst;
**dadurch gekennzeichnet, dass** die Batterie eine elektronische Karte zur Verwaltung der Batterie umfasst, die sich von dem Funk-Identifikationschip (12) unterscheidet, und dass die elektronische Karte eine eindeutige Kennung der Batterie umfasst,
wobei die eindeutige Kennung von einer geeigneten elektronischen Vorrichtung gelesen werden kann, wenn der elektrische Anschluss der Batterie (8) mit der elektronischen Vorrichtung verbunden ist.

2. Batterie nach Anspruch 1, wobei der Funk-Identifikationschip (12) im Inneren des Gehäuses untergebracht ist.

3. Batterie nach Anspruch 1 oder Anspruch 2, die zwei Funk-Identifikationschips (12) umfasst, die sich an zwei von der Batterie (2) entfernten Stellen befinden.

4. Batterieaustauschsystem, das Folgendes umfasst:
- eine Batterieaustauschstation (13) für ein Elektrofahrzeug, die Folgendes umfasst:
o ein Funk-Identifikationslesegerät (16), das dazu geeignet ist, mit einem Funk-Identifikationschip (12) einer Batterie, der eine Kennung umfasst, zu kommunizieren,
o einen Stationsanschluss, der dazu geeignet ist, mit dem elektrischen Anschluss der Batterie (8) verbunden zu werden, um eine eindeutige Kennung der Batterie, die sich von der Kennung des Funk-Identifikationschips unterscheidet, auszulesen und diese an ein entferntes Computersystem zu übertragen, und
o ein drahtgebundenes oder drahtloses Kommunikationssystem, das einen Datenaustausch mit dem entfernten Computersystem (20) ermöglicht,
- das entfernte Computersystem, das Daten in Bezug auf mehrere Batterien (2) enthält und das dazu konfiguriert ist, die Übereinstimmung zwischen der eindeutigen Kennung der Batterie und der Kennung des Funk-Identifikationschip, den sie trägt, zu überprüfen.

5. Batterieaustauschstation nach Anspruch **4,** wobei die Batterieaustauschstation (13) eine Anordnung von Stationsgehäusen (18) umfasst, die dazu geeignet sind, jeweils eine Batterie aufzunehmen, wobei jedes Stationsgehäuse (18) eine Absperrvorrichtung für das Stationsgehäuse (18) umfasst, die durch ein automatisches Öffnungs- und Schließsystem gesteuert wird, wobei das automatisierte System dazu konfiguriert ist, das Öffnen eines Stationsgehäuses (18) als Reaktion auf das Detektieren der Nähe eines Funk-Identifikationschips (12) einer Batterie (2) und das Bestätigen anhand einer Kennung des detektierten Funk-Identifikationschips (12), dass die Batterie (2) autorisiert ist, ausgetauscht zu werden, zu steuern.

6. Batterieaustauschstation nach Anspruch 4 oder Anspruch 5, wobei die im entfernten Computersystem (20) enthaltenen Daten für jede Batterie (2) Folgendes umfassen:
- eine Kennung jedes Funk-Identifikationschips (12), den die Batterie (2) umfasst; und
- die eindeutige Kennung, die die elektronische Karte der Batterie umfasst.

7. Batterieaustauschsystem nach Anspruch 6, wobei die im entfernten Computersystem (20) enthaltenen Daten ferner für jede Batterie (2) eine der Batterie zugeordnete Kennung eines Benutzers (15) umfassen.

8. Batterieaustauschsystem nach Anspruch 7, wobei die im entfernten Computersystem (20) enthaltenen Daten in Verbindung mit der Kennung eines Benutzers Daten umfassen, die sich auf ein Abonnement des Benutzers (15) für das Batterieaustauschsystem beziehen.

9. Batterieaustauschsystem nach Anspruch 8, wobei das Öffnen eines Stationsgehäuses (18), das eine geladene Batterie (2) enthält, nach dem Überprüfen der Daten, die sich auf das Abonnement des Benutzers beziehen, durch Kommunikation mit dem entfernten Computersystem (20) gesteuert wird.

10. Batterieaustauschsystem nach einem der Ansprüche 4 bis 9, das mehrere Austauschstationen (13) umfasst, die dazu geeignet sind, mit demselben entfernten Computersystem (20) zu kommunizieren, und so ein Netzwerk von Batterieaustauschstationen bilden.

11. Batterieaustauschsystem nach einem der Ansprüche 4 bis 10, das ferner ein Elektrofahrzeug umfasst, das dazu geeignet ist, eine Batterie (2) aufzunehmen, die von einer Batterieaustauschstation (13) des Systems kommt, wobei das Fahrzeug Mittel umfasst, die dazu geeignet sind, die eindeutige Kennung der Batterie zu lesen, wobei das Fahrzeug ferner Kommunikationsmittel umfasst, die dazu geeignet sind, die eindeutige Kennung der Batterie (2) und eine Kennung des Fahrzeugs an das entfernte Computersystem (20) zu kommunizieren.

12. Verfahren zum Austauschen einer Batterie eines Elektrofahrzeugs durch einen Benutzer (15), um eine entladene Batterie (2) gegen eine geladene Batterie (2) auszutauschen, das die folgenden Schritte umfasst:
- Bereitstellen einer entladenen Batterie (2) in der Nähe einer Batterieaustauschstation (13);
- Detektieren der Nähe eines Funk-Identifikationschips (12), den die entladene Batterie (2) umfasst, durch die Austauschstation (13) und Bestimmen einer Kennung des Funk-Identifikationschips (12);
- Bestätigen anhand einer Kennung des Chips, dass die Batterie autorisiert ist, ausgetauscht zu werden;
- Angeben eines Empfangsorts für die entladene Batterie (2) durch die Station (13);
- Anschließen eines elektrischen Anschlusses der Batterie (8) an einen Anschluss der Station am angegebenen Empfangsort;
- Lesen einer eindeutigen Kennung der Batterie in einer elektronischen Karte der Batterie, die sich vom Funk-Identifikationschip unterscheidet, über den Anschluss der Batterie;
- Übertragen der eindeutigen Kennung der Batterie an ein entferntes Computersystem;
- Überprüfen der Übereinstimmung zwischen der eindeutigen Kennung der Batterie und der Kennung des Funk-Identifikationschips, den sie trägt;
- Überprüfen in einem entfernten Computersystem (20), dass die Daten, die sich auf den Benutzer beziehen und unter Verwendung einer Kennung eines Benutzers der Batterie zugeordnet sind, das Liefern einer geladenen Batterie (2) autorisieren;
- wenn das Liefern einer geladenen Batterie (2) autorisiert ist, Zuordnen der Kennung des Benutzers zu einer geladenen Batterie (2), die die Austauschstation (13) enthält, im entfernten Computersystem (20) und Liefern der aufgeladenen Batterie (2).

13. Austauschverfahren nach Anspruch 12, das ferner einen Schritt des Überprüfens der Übereinstimmung zwischen der Kennung des Funk-Identifikationschips, der eindeutigen Kennung der Batterie und der der Batterie zugeordneten Kennung des Benutzers in dem entfernten Computersystem (20) umfasst.

## Claims

1. Electric-vehicle battery (2) including a case containing at least one battery cell adapted to store electrical energy, the battery (2) including an electrical connector (8) of the battery and a radio-identification chip (12) including an identifier;
**characterized in that** the battery includes an electronic card for managing the battery, distinct from the radio-identification chip (12),
and **in that** the electronic card includes a unique identifier of the battery, the unique identifier being able to be read by an adapted electronic device when the electrical connector (8) of the battery is connected to said electronic device.

2. Battery according to claim 1, wherein the radio-identification chip (12) is housed inside the case.

3. Battery according to claim 1 or claim 2, including two radio-identification chips (12) located at two locations distant from the battery (2).

4. Battery-exchange system including
- a battery-exchange station (13) for electric vehicles, including:
∘ a radio-identification reader (16) adapted to communicate with a radio-identification chip (12) of a battery including an identifier,
o a station connector adapted to be connected to the electrical connector of the battery (8) for reading a unique identifier of the battery distinct from the identifier of the radio-identification chip and transmitting same to a remote computer system, and
o a communication system, wired or wireless, allowing an exchange of data with the remote computer system (20),
- the remote computer system, which contains data relating to a plurality of batteries (2) and is configured to check the match between the unique identifier of the battery and the identifier of the radio-identification chip that it carries.

5. Battery-exchange system according to claim 4, wherein the battery-exchange station (13) includes a set of station housings (18) adapted each to receive a battery, each station housing (18) including a device for closing said station housing (18) controlled by an automated opening and closing system, said automated system being configured to control the opening of a station housing (18) in response to the detection, by the radio-identification reader (16), of a proximity of a radio-identification chip (12) of a battery (2) and to a confirmation, on the basis of an identification of the radio-identification chip (12) detected, that the battery (2) is authorized to be exchanged.

6. Battery-exchange system according to claim 4 or claim 5, wherein the data contained by the remote computer system (20) include, for each battery (2):
- an identifier of each radio-identification chip (12) that the battery (2) includes; and
- the unique identifier that the electronic card of the battery includes.

7. Battery-exchange system according to claim 6, wherein the data contained by the remote computer system (20) furthermore include, for each battery (2), an identifier of a user (15) associated with the battery.

8. Battery-exchange system according to claim 7, wherein the data contained by the remote computer system (20) include, in association with the identifier of a user, data relating to a subscription of the user (15) to the battery-exchange system.

9. Battery-exchange system according to claim 8, wherein the opening of a station housing (18) containing a charged battery (2) is controlled after checking, by communication with the remote computer system (20), of the data relating to the subscription of the user.

10. Battery-exchange system according to one of claims 4 to 9, including a plurality of exchange stations (13) adapted to communicate with the same remote computer system (20), thus forming a network of battery-exchange stations.

11. Battery-exchange system according to one of claims 4 to 10, furthermore including an electric vehicle adapted to receive a battery (2) coming from a battery-exchange station (13) of said system, the vehicle including means adapted to read the unique identifier of the battery, the vehicle furthermore including communication means adapted to communicate, to the remote computer system (20), said unique identifier of the battery (2) and an identifier of the vehicle.

12. Method for exchanging a battery of an electric vehicle by a user (15), for exchanging a discharged battery (2) against a charged battery (2), including the following steps:
- provision of a discharged battery (2) in proximity to a battery-exchange station (13);
- detection, by the exchange station (13), of the proximity of a radio-identification chip (12) that the discharged battery (2) includes and determination of an identifier of the radio-identification chip (12);
- confirmation, based on an identifier of the chip, that the battery is authorized to be exchanged;
- indication, by the station (13), of a reception location for the discharged battery (2);
- connection of an electrical connector of the battery (8) to a connector of the station, at the indicated reception location;
- reading of a unique identifier of the battery in an electronic card of the battery distinct from the radio-identification chip, via the connector of the battery;
- transmission of the unique identifier of the battery to a remote computer system;
- checking of the match between the unique identifier of the battery and the identifier of the radio-identification chip that it carries;
- checking, in the remote computer system (20), that the data relating to the user and associated with the battery by means of an identifier of the user authorize the delivery of a charged battery (2);
- if the delivery of a charged battery (2) is authorized, association, in the remote computer system (20), of the identifier of the user with a charged battery (2) that the exchange station (13) contains, and delivery of the charged battery (2).

13. Exchange method according to claim **12,** furthermore including a step of checking, in the remote computer system (20), the match between the radio-identification chip identifier, the unique identifier of the battery and the identifier of the user associated with the battery.
